Europäisches Patentamt

European Patent Office

Office européen des brevets

(11) Veröffentlichungsnummer: **0 304 694**
**A2**

## (12) EUROPÄISCHE PATENTANMELDUNG

(21) Anmeldenummer: 88112639.5

(22) Anmeldetag: 03.08.88

(51) Int. Cl.⁴: **B60J 1/10**

(30) Priorität: 26.08.87 DE 3728440

(43) Veröffentlichungstag der Anmeldung:
01.03.89 Patentblatt 89/09

(84) Benannte Vertragsstaaten:
**DE ES FR GB IT NL SE**

(71) Anmelder: **METZELER Gesellschaft mit
beschränkter Haftung
Gneisenaustrasse 15
D-8000 München 50(DE)**

(72) Erfinder: **Schröter, Axel
Vogesenstrasse 39
D-6800 Mannheim 71(DE)**

(74) Vertreter: **Michelis, Theodor, Dipl.-Ing.
Gneisenaustrasse 15
D-8000 München 50(DE)**

(54) **Fest einbaubare Scheibe, insbesondere für Kraftfahrzeuge.**

(57) Bei einer fest einbaubaren Scheibe, insbesondere für Kraftfahrzeuge, mit einer umlaufenden unmittelbar an den Scheibenrand angespritzten Dichtung ist zur leichteren und insbesondere automatisierbaren Montage erfindungsgemäß vorgesehen, daß in vorgegebenen Abständen unmittelbar in die Dichtung (2) elastische, schnappbare Einsätze (4) teilweise eingebettet sind, die den zugeordneten Karosserieflansch (7) einseitig im Schnappeingriff umfassen.

# FIG.1

EP 0 304 694 A2

## Fest einbaubare Scheibe, insbesondere für Kraftfahrzeuge

Die Erfindung bezieht sich auf eine fest einbaubare Scheibe, insbesondere für Kraftfahrzeuge, mit einer umlaufenden, unmittelbar an den Scheibenrand angespritzten Dichtung, sowie mit Halterungsmitteln zur Befestigung der Scheibe in entsprechenden Karosserieausschnitten.

Eine derartige Scheibe ist beispielsweise aus der DE-PS 31 40 366 bekannt. Eine solche, mit einer integralen Dichtung versehene Scheibe hat jedoch den Nachteil, daß zur Befestigung im Karosserieausschnitt komplizierte manuelle Montageinterventionen erforderlich sind, die üblicherweise mit einem Seil erfolgt, durch das die an der Scheibe angeordnete Dichtung verformt wird, um sie rittlings auf dem Rahmen bzw. dem Karosserieausschnitt anzuordnen.

Ferner ist ein Montagesystem bekannt, bei dem in die Dichtung eingebettete Clipse in dafür vorgesehene Öffnungen des zugehörigen Karosserieflansches eingedrückt werden. Dieses System hat jedoch den Nachteil, daß in dem Karosserieflansch Öffnungen ausgestanzt werden müssen, deren Kanten verstärkten Korrosionen ausgesetzt sein können und die darüber hinaus eine sehr genaue Lagetoleranz zu den Clipsen aufweisen müssen.

Demgegenüber liegt der vorliegenden Erfindung die Aufgabe zugrunde, eine fest einbaubare Scheibe zu schaffen, die auf sehr einfache Weise mechanisch und reversibel an der Kraftfahrzeugkarosserie angebracht werden kann, und wobei insbesondere der Einsatz von automatischen Robotersystemen zum Einbau möglich ist.

Zur Lösung dieser Aufgabe ist erfindungsgemäß vorgesehen, daß die Halterungsmittel aus elastischen, in vorgegebenen Abständen unmittelbar in die Dichtung zumindest teilweise eingebetteten, schnappbaren Einsätzen bestehen, die den zugeordneten Karosserieflansch einseitig im Schnappeingriff umfassen.

Durch eine derartige Ausbildung der Dichtung mit direkt eingebetteten, nach nur einer Seite schnappbaren Einsätzen ist es einerseits nicht mehr erforderlich, Öffnungen im Karosserieflansch auszustanzen, da die Einsätze die Flanschkante seitlich umfassen. Andererseits ist es aber möglich, die Scheibe unmittelbar reversibel in die entsprechenden Karosserieausschnitte auch mit Robotersystemen einzudrücken.

Die Einsätze selbst bestehen zweckmäßigerweise aus einem von der Scheibenebene vertikal abragenden Steg mit einem widerhakenartigen, vom freien Stegende seitlich abragenden Ansatz.

Die Einsätze können dabei einen verbreiterten Fuß aufweisen, mit dem sie unter chemisch-molekularer Haftung mit der Dichtung verbunden sind.

Die Dichtung selbst besteht zweckmäßigerweise aus einem ungeschäumtem Polyurethan-Elastomer mit einer Shore-A-Härte von 50 bis 90.

Die Einsätze können aus einem elastischen Kunststoffmate rial, wie beispielsweise Nylon oder Polyamid, bestehen.

Zweckmäßig ist es, wenn bei einer Dichtungsausführung in einer Shore-A-Härte von mindestens 80 die Einsätze einstückig mit der Dichtung an die Scheibe angeformt sind.

Bei einer derartigen relativ harten Dichtung ist es zweckmäßig, wenn die Dichtung auf der dem Karosserieflansch zugekehrten Seite eine umlaufende, nutförmige Ausnehmung aufweist, in der eine Dichtschnur aus weichelastischem, zelligem Material befestigt ist. Dieses Material kann dabei aus Moosgummi bestehen.

Bei einem Verfahren zur Herstellung einer solchen fest einbaubaren Scheibe ist erfindungsgemäß vorgesehen, daß die Scheibe und in vorgegebener Zuordnung dazu die Einsätze in eine Spritzgießform eingelegt und das Dichtungsrohmaterial den Scheibenrand und die Füße der Einsätze umhüllend eingespritzt wird.

Es ist aber auch möglich, daß die Scheibe in eine Spritzgießform eingelegt und das Dichtungsrohmaterial in den die Konfiguration von Dichtung und zugeordneten Einsätzen aufweisenden Formhohlraum eingespritzt wird.

Anhand einer schematischen Zeichnung sind Aufbau und Wirkungsweise von Ausführungsbeispielen nach der Erfindung näher erläutert. Dabei zeigen

Fig. 1 einen Querschnitt durch eine Dichtung mit Einsätzen aus härterem Material im an die Scheibe angeformten und einen Karosserieflansch umfassenden Zustand und

Fig. 2 einen gleichartigen Querschnitt durch eine Dich tung mit unmittelbar angeformtem Einsatz aus gleichem Material.

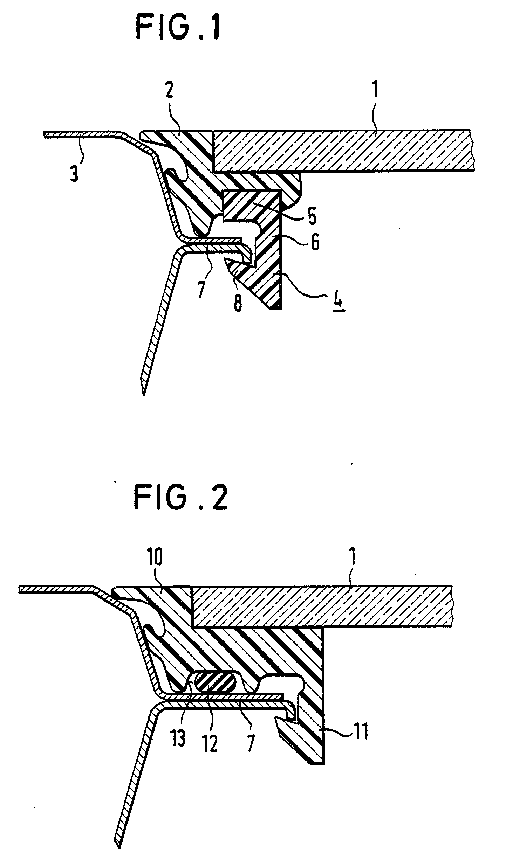

Wie man aus dem Querschnitt nach Fig. 1 ersieht, ist an den Rand der Scheibe 1 unmittelbar eine Dichtung 2 aus ungeschäumtem Polyurethan angespritzt und zwar so, daß diese auf der Außenseite bündig mit der Oberfläche der Scheibe 1 abschließt, um einen möglichst geringen Luftwiderstand zu bieten. Die Dichtung 2 weist zweckmäßigerweise eine Shore-A-Härte von 50 bis 90 auf, um eine hinreichende Abdichtwirkung gegenüber dem Karosserieblech 3 zu bewirken.

Auf der Innenseite der Dichtung 2 sind im vorgegebenen Abstand Einsätze 4 eingeformt, die aus einem elastischen Kunststoff, beispielsweise Nylon oder Polyamid bestehen. Diese Einsätze 4 weisen nach dem dargestellten Ausführungsbeispiel einen verbreiterten Fuß 5, einen vertikal von der Scheibenebene abragenden Steg 6 sowie einen widerhakenartigen, vom freien Stegende seitlich in Richtung auf den Karosserieflansch 7 abragenden Ansatz 8 auf.

Diese Einsätze 4 werden bei der Herstellung der Dichtung 2 neben der Scheibe 1 in entsprechende Ausnehmungen der Spritzgießform eingesetzt und dann unmittelbar vom eingespritzten Dichtungsmaterial umgeben, so daß der Fuß 5 eines solchen Einsatzes 4 unmittelbar in die Dichtung 2 eingebettet ist. Aufgrund entsprechender Materialaffinitäten erfolgt eine Bindung der Einsätze an die Dichtung durch chemisch-molekulare Haftung, die während der dimensionalen Formung des Polyurethan-Elastomers erfolgt. In gleicher Weise besteht eine Haftung zwischen Glasscheibe 1 und Dichtung 2, wobei zweckmäßigerweise der Rand der Scheibe 1 vorher mit einem handelsüblichen Primersystem, wie z.B. Silane, vorbehandelt wird.

Die so unmittelbar mit einer angeformten Dichtung 2 und den Einsätzen 4 gefertigte Scheibe 1 kann dann durch einfachen Druck von außen in die entsprechende Karosserieöffnung eingedrückt werden, wobei die Einsätze 4 einmal durch die elastische Nachgiebigkeit unter Zurückbiegung des Ansatzes 8 und zum anderen durch die Elastizität der Dichtung 2 seitlich ausweichen und um den Karosserieflansch 7 herumschnappen und damit eine feste Halterung und Verspannung der Scheibe 1 bewirken.

Bei dem in Fig. 2 dargestellten Ausführungsbeispiel sei die Dichtung 10 aus einem Material mit einer Shore-A-Härte von beispielsweise 80, also einem relativ steifen Material, gefertigt. In einem solchen Fall kann der Einsatz 11 unmittelbar in einem Stück an die Dichtung 10 angeformt bzw. einstückig mit dieser hergestellt werden. Um dabei Unebenheiten, beispielsweise in Form von Schweißnähten, am Karosserieflansch 7 auszugleichen und um eine einwandfreie Dichtfunktion zu gewährleisten, ist es bei einer solchen Dichtung zweckmäßig, zusätzlich eine umlaufende Moosgummi-Dichtschnur 12 vorzusehen, die in einer umlaufenden Nut 13 auf der Innenseite der Dichtung 10 befestigt oder in diese eingeklebt ist.

Mit der beschriebenen Ausgestaltung der Dichtung und der Schnappeinsätze ist es also möglich, eine Scheibe auf einfache Weise fest und abdichtend in eine entsprechende Karosserieöffnung eines Kraftfahrzeuges einzusetzen, wobei insbesondere auch eine maschinelle Montage möglich ist. Die beschriebene Ausgestaltung der Schnappeinsätze stellt dabei nur eine mögliche Ausgestaltungsform dar; entsprechend der jeweiligen Formgebung des zugeordneten Karosserieflansches sind selbstverständlich auch andere Ausgestaltungen unter Einhaltung des gleichen Befestigungsprinzip möglich.

## Ansprüche

1. Fest einbaubare Scheibe, insbesondere für Kraftfahrzeuge, mit einer umlaufenden, unmittelbar an den Scheibenrand angespritzten Dichtung, sowie mit Halterungsmitteln zur Befestigung der Scheibe in entsprechenden Karosserieausschnitten, dadurch gekennzeichnet, daß die Halterungsmittel aus elastischen, in vorgegebenen Abständen unmittelbar in die Dichtung (2;10) zumindest teilweise eingebetteten, schnappbaren Einsätzen (4;11) bestehen, die den zugeordneten Karosserieflansch (7) einseitig im Schnappeingiff umfassen.

2. Fest einbaubare Scheibe nach Anspruch 1, dadurch gekennzeichnet, daß die Einsätze (4) aus einem von der Scheibenebene (1) vertikal abragenden Steg (6) mit einem widerhakenartigen, vom freien Stegende seitlich abragenden Ansatz (8) bestehen.

3. Fest einbaubare Scheibe nach Anspruch 2, dadurch gekennzeichnet, daß die Einsätze (4) einen verbreiterten Fuß (5) aufweisen, mit dem sie unter chemisch-molekularer Haftung mit der Dichtung (2) verbunden sind.

4. Fest einbaubare Scheibe nach Anspruch 1, dadurch gekennzeichnet, daß die Dichtung (2) aus ungeschäumtem Polyurethan-Elastomer mit einer Shore-A-Härte von 50 bis 90 besteht.

5. Fest einbaubare Scheibe nach einem oder mehreren der Ansprüche 1 bis 4, dadurch gekennzeichnet, daß die Einsätze (4) aus einem elastischen Kunststoffmaterial bestehen.

6. Fest einbaubare Scheibe nach Anspruch 4, dadurch gekennzeichnet, daß die Dichtung (10) eine Shore-A-Härte von mindestens 80 aufweist und die Einsätze (11) einstückig mit der Dichtung (10) an die Scheibe (1) angeformt sind.

7. Fest einbaubare Scheibe nach Anspruch 6, dadurch gekennzeichnet, daß die Dichtung (10) auf der dem Karosserieflansch (7) zugekehrten Seite eine umlaufende, nutförmige Ausnehmung (13) aufweist, in der eine Dichtschnur (12) aus weichelastischem, zelligen Material befestigt ist.

8. Fest einbaubare Scheibe nach Anspruch 7, dadurch gekennzeichnet, daß die Dichtschnur (12) aus Moosgummi besteht.

9. Verfahren zur Herstellung einer fest einbaubaren Scheibe nach Anspruch 1, dadurch gekennzeichnet, daß die Scheibe und in vorgegebener Zuordnung dazu die Einsätze in eine Spritzgießform eingelegt und das Dichtungsrohmaterial den Scheibenrand und die Füße der Einsätze umhüllend eingespritzt wird.

10. Verfahren zur Herstellung einer fest einbaubaren Scheibe nach Anspruch 6, dadurch gekennzeichnet, daß die Scheibe in eine Spritzgießform eingelegt und das Dichtungsrohmaterial in den die Konfiguration von Dichtung und zugeordneten Einsätzen aufweisenden Formenhohlraum eingespritzt wird.

# FIG .1

# FIG .2